# EUROPEAN PATENT SPECIFICATION

(11) **EP 2 392 609 B1**
(45) Date of publication and mention of the grant of the patent: **31.07.2013**
(21) Application number: 11168421.3
(22) Date of filing: 01.06.2011
(51) Int. Cl.: C08J 3/24, C08J 9/00, C09K 3/10, C08L 23/16

(54) **Water and corrosion resistant EPDM foam and adhesive sealing material**
Wasserfester und Korrosionsbeständiger EPDM-Schaum und Klebeabdichtmaterial
Mousse EPDM résistant à l'eau et à la corrosion et matériau de scellage adhésif

(30) Priority: 06.06.2010 JP 2010129500; 26.04.2011 JP 2011097900
(43) Date of publication of application: 07.12.2011
(60) Divisional application: 13167442.6
(73) Proprietor: NITTO DENKO CORPORATION, Ibaraki-shi, Osaka 567-8680 (JP)
(72) Inventor: Kawata, Joji, Osaka, 567-8680 (JP); Iwase, Takayuki, Osaka, 567-8680 (JP); Takahashi, Nobuyuki, Osaka, 567-8680 (JP)
(74) Representative: Schwabe - Sandmair - Marx

(56) References cited:
- CH-A- 473 179
- US-B1- 6 303 694

## Description

### CROSS REFERENCE TO RELATED APPLICATIONS

The present applications claim priority from Japanese Patent Application No. 2010-129500 filed on June 6, 2010 and Japanese Patent Application No. 2011-097900 filed on April 26, 2011.

### BACKGROUND OF THE INVENTION

### Field of the Invention

The present invention relates to EPDM foams and adhesive sealing materials, and more particularly to an EPDM foam containing an ethylene-propylene-diene rubber, and an adhesive sealing material having the EPDM foam.

### Description of Related Art

Conventionally, ethylene-propylene-diene rubber foams obtained by foaming an ethylene-propylene-diene rubber (hereinafter abbreviated as EPDM in some cases) have been known as sealing materials for a variety of industrial products. For the purpose of dust proof, heat insulation, noise reduction, damping, shock-absorbing, and water and air tight, EPDM foams have been widely used as sealing materials for filling gaps in a variety of industrial products such as image appliances including video camera-recorders, digital cameras, and copying machines, electrical appliances, housing materials, or automobile materials. In recent years, EPDM foams have also been widely used in information appliances equipped with liquid crystal displays (LCD) such as personal computer, cellular phone, or PDA in the form of sealing materials for sealing around LCD.

In general, an EPDM foam is produced by foaming an ethylene-propylene-diene rubber with a foaming agent and also crosslinking the EPDM with sulfur (cf. for example, Japanese Unexamined Patent Publications No. 2002-309026 and No. 2003-160685).

As is also known, an EPDM foam is produced by foaming an ethylene-propylene-diene rubber with a foaming agent and also crosslinking the EPDM with an organic peroxide (cf. for example, Japanese Unexamined Patent Publication No. 2002-179825).

US 6,303,694 B1 discloses a sealant composition comprising an EPDM resin, a low molecular weight polymer and a quinoid curing agent.

CH 473179 A discloses a foamed rubber composition wherein p-quinonedioxime is used as a vulcanization accelerator.

### SUMMARY OF THE INVENTION

However, when an ethylene-propylene-diene rubber is cross-linked with sulfur, depending on the type of member to be sealed, some sulfur remaining in the obtained EPDM foam may corrode the member. Further, when an ethylene-propylene-diene rubber is crosslinked with an organic peroxide under the presence of oxygen, the crosslinking on the surface of the obtained EPDM foam is insufficient, so that the surface thereof may become tacky.

It is an object of the present invention to provide an EPDM foam with adequate sealing and reduced metal corrosion having a high foaming ratio, and an adhesive sealing material having the EPDM foam.

The EPDM foam of the present invention contains an ethylene-propylene-diene rubber, in which the EPDM foam has water stopping performance lasting for 1 hour or more according to the following 50% waterstop test and metal corrosion is not observed according to the following metal corrosion test:
50% Waterstop test: An EPDM foam sample is prepared by punching in a U-shape of 10 mm in thickness, 10 mm in width, 148 mm in height, and 54 mm in distance between its both distal ends, the prepared sample is compressed in a thickness direction at a compressibility of 50%, water is poured into the U shape portion up to 100 mm high, and the period of time is measured until water leaks.
Metal corrosion test: After 0.5 g of the EPDM foam is put into a 100-mL sealed bottle, a polished and washed silver (in plate form) is affixed to the inside of a lid of the sealed bottle. This bottle is placed in an 85°C thermostat oven for 7 days, and the presence or absence of silver corrosion is then examined.

It is preferable that the EPDM foam of the present invention has water stopping performance lasting for 24 hours or more according to the 50% waterstop test.

It is preferable that the EPDM foam of the present invention has a density of 0.30 g/cm³ or less and has a closed cell structure.

It is preferable that the EPDM foam of the present invention is obtained by foaming a rubber composition containing an ethylene-propylene-diene rubber, a quinoid crosslinking agent, and a foaming agent. Further, it is preferable that the quinoid crosslinking agent contains p-quinonedioxime, and p-quinonedioxime is contained in an amount of 0.01 to 20 parts by weight per 100 parts by weight of the ethylene-propylene-diene rubber.

The adhesive sealing material of the present invention includes a foamed layer made of the above-mentioned EPDM foam; and an adhesive layer provided on a surface of the foamed layer.

Since the EPDM foam of the present invention has high water stopping performance according to the above-mentioned waterstop test, it has the same level of sealing performance as the case of crosslinking the EPDM foam with conventional sulfur. Further, since the EPDM foam does not have metal corrosiveness, the EPDM foam can be used even in applications where the EPDM foam is in contact with metals such as electronic equipment and home appliances over a long period of time without causing metal corrosion.

In addition, since the foamed layer is made of the above-mentioned EPDM foam, the adhesive sealing material of the present invention is excellent in sealing performance and metal corrosion resistance. Further, since the adhesive sealing material has the adhesive layer, the foamed layer can be adhesively bonded to any place. As a result of this, according to the adhesive sealing material of the present invention, the EPDM foam described above can effectively seal a gap in any member without causing metal corrosion.

### BRIEF DESCRIPTION OF THE DRAWINGS

FIG. 1 is a schematic view showing an outline of a 50% waterstop test; and
FIG. 2 is a schematic sectional view showing an embodiment of an adhesive sealing material according to the present invention.

### DETAILED DESCRIPTION OF PREFERRED EMBODIMENTS

The EPDM foam of the present invention can be obtained by foaming a rubber composition containing an ethylene-propylene-diene rubber, a crosslinking agent, and a foaming agent.

Ethylene-propylene-diene rubber is a rubber obtained by copolymerization of ethylene, propylene, and dienes. The copolymerization of dienes, in addition to ethylene and propylene, allows introduction of an unsaturated bond, thereby enabling crosslinking of the EPDM with a crosslinking agent.

The dienes that may be used include, for example, cyclic dienes such as 5-ethylidene-2-norbornene, 1,4-hexadiene, 5-propylidene-5-norbornene, dicyclopentadiene, 5-vinyl-2-norbornene, 5-methylene-2-norbornene, 5-isopropylidene-2-norbornene, and norbomadiene; chain non-conjugated dienes such as 1,4-hexadiene, 4-methyl-1,4-hexadiene, 5-methyl-1,4-hexadiene, 5-methyl-1,5-heptadiene, 6-methyl-1,5-heptadiene, 6-methyl-1,7-octadien, and 7-methyl-1,6-octadien; and trienes such as 2,3-diisopropylidene-5-norbornene and 4-ethylidene-8-methyl-1,7-nonadiene. Of these, diene with a high crosslinking rate capable of reducing diene content is preferable from the viewpoint of obtaining an EPDM foam having excellent heat resistance and weather resistance, and 5-ethylidene-2-norbornene is particularly preferred.

According to the present invention, the content of dienes (diene content) in the ethylene-propylene-diene rubber is in the range of, for example, 3 to 20% by weight, or preferably 4 to 12% by weight. A lower content of dienes than this range may cause surface shrinkage on the obtained EPDM foam. Conversely, a higher content of dienes than this may produce a crack in the EPDM foam.

The ethylene content of the ethylene-propylene-diene rubber is in the range of 50 to 75% by weight, or preferably 50 to 55% by weight. When the ethylene content is within this range, the ethylene-propylene-diene rubber is advantageous in that the compression set at low temperature is small.

The ethylene-propylene-diene rubber has a Mooney viscosity (ML₁₊₄, 100°C) in the range of 10 to 60, or preferably 20 to 50. When the Mooney viscosity is within this range, the ethylene-propylene-diene rubber has advantages of easy foaming and good workability.

According to the present invention, the crosslinking agent is not particularly limited, and for example, selenium, magnesium oxide, lead monoxide, zinc oxide, polyamines, oximes, nitroso compounds (e.g., p-dinitroso benzine), resins (e.g., alkylphenol-fonnaldehyde resins and melamine-formaldehyde condensates), and ammonium salts (e.g., ammonium benzoate) may be used. These crosslinking agents can be used alone, or two or more kinds of crosslinking agents can be appropriately selected and used. A quinoid crosslinking agent is preferably used from the viewpoint of physical properties originated from the crosslinking of the obtained rubber foam. In the present invention, it is desirable not to substantially use sulfur and sulfur compounds as a vulcanizing agent because if used, the remaining sulfur component in the EPDM foam can cause metal corrosion.

The word "substantially" means that the sulfur and sulfur compounds are not blended as a crosslinking agent, but, for example, impurities contained in other members are not excluded. It should be noted, however, that in order to prevent metal corrosion, the sulfur component in the EPDM foam is preferably not detected by general analytical methods, and specifically, less than 1000 ppm of the sulfur component in the EPDM foam is desirable.

The quinoid crosslinking agent that may be used is an organic compound having a quinoid structure, and includes, for example, p-quinonedioxime, p,p'-dibenzoyl quinonedioxime, and poly-p-dinitroso benzene. Preferably p-quinonedioxime and p,p'-dibenzoyl quinonedioxime, or more preferably p-quinonedioxime are/is used as the quinoid crosslinking agent.

These quinoid crosslinking agents may be used alone or in combination of two or more kinds. For example, p-quinonedioxime and p,p'-dibenzoyl quinonedioxime may be used in combination. The combination use of p-quinonedioxime and p,p'-dibenzoyl quinonedioxime can increase the degree of crosslinking of the foam, thereby suppressing shrinkage of the foam.

The mixing ratio of the crosslinking agent is in the range of, for example, 0.01 to 20 parts by weight, preferably 0.05 to 15 parts by weight, or more preferably 0.1 to 12 parts by weight, per 100 parts by weight of the ethylene-propylene-diene rubber.

In particular, the mixing ratio of the quinoid crosslinking agent is in the range of, for example, 0.01 to 20 parts by weight, preferably 0.05 to 15 parts by weight, or more preferably 0.1 to 12 parts by weight, per 100 parts by weight of the ethylene-propylene-diene rubber. Specifically, in the case of using p-quinonedioxime, the mixing ratio of the p-quinonedioxime is in the range of, for example, 0.05 to 2 parts by weight, or preferably 0.1 to 1 part by weight, per 100 parts by weight of the ethylene-propylene-diene rubber. In the case of using p,p'-dibenzoyl quinonedioxime, the mixing ratio of the p,p'-dibenzoyl quinonedioxime is in the range of, for example, 0.05 to 10 parts by weight, or preferably 0.5 to 7 parts by weight, per 100 parts by weight of the ethylene-propylene-diene rubber.

In the case of using p-quinonedioxime and p,p'-dibenzoyl quinonedioxime, in combination, the weight ratio of p,p'-dibenzoyl quinonedioxime to p-quinonedioxime (p,p'-dibenzoyl quinonedioxime/p-quinonedioxime) is in the range of, for example, 0.25 to 50, preferably 1.1 to 40, or more preferably 5 to 30.

According to the present invention, the foaming agents that may be used include an organic foaming agent and an inorganic foaming agent.

The organic foaming agents that may be used include, for example, azo foaming agents such as azodicarbonamide (ADCA), barium azodicarboxylate, azobisisobutyronitrile (AIBN), azocyclohexylnitrile, and azodiaminobenzene; N-nitroso foaming agents such as N,N'-dinitrosopentamethylenetetramine (DTP), N,N'-dimethyl-N,N'-dinitroso terephthalamide, and trinitrosotrimethyltriamine; hydrazide foaming agents such as 4,4'-oxybis(benzenesulphonyl hydrazide) (OBSH), paratoluene sulfonylhydrazide, diphenyl sulfone-3,3'-disulfonylhydrazide, 2,4-toluene disulfonylhydrazide, p,p-bis(benzenesulfonyl hydrazide) ether, benzene-1,3-disulfonylhydrazide, and allylbis(sulfonylhydrazide); semicarbazide foaming agents such as p-toluylenesulfonyl semicarbazide and 4,4'-oxybis(benzenesulfonyl semicarbazide); fluoroalkane foaming agents such as trichloromonofluoromethane and dichloromonofluoromethane; triazole foaming agents such as 5-morphoryl-1,2,3,4-thiatriazole; and other known organic foaming agents. The organic foaming agents that may be used also include thermally expansible microparticles containing microcapsules in which thermally expansive material is encapsulated. Commercially available products, such as Microsphere (trade name, available from Matsumoto Yushi-Seiyaku Co., Ltd.) may be used as the thermally expansible microparticles.

The inorganic foaming agents that may be used include, for example, hydrogencarbonates such as sodium hydrogencarbonate and ammonium hydrogencarbonate; carbonates such as sodium carbonate and ammonium carbonate; nitrites such as sodium nitrite and ammonium nitrite; boron hydride salts such as sodium borohydride; azides; and other known inorganic foaming agents. Preferably, azo foaming agents are used. These foaming agents may be used alone or in combination of two or more kinds.

The mixing ratio of the foaming agent is in the range of, for example, 0.1 to 50 parts by weight, or preferably 1 to 30 parts by weight, per 100 parts by weight of the ethylene-propylene-diene rubber.

The rubber composition properly contains a crosslinking accelerator and a foaming aid as required. The crosslinking accelerators that may be used include, for example, thiazoles (e.g., dibenzothiazyl disulfide, 2-mercaptobenzothiazole, etc.), thioureas (e,g., diethyl thiourea, trimethyl thiourea, dibutyl thiourea, etc.), dithiocarbamic acids (e.g., sodium dimethyldithiocarbamate, sodium diethyldithiocarbamate, zinc dimethyldithiocarbamate, zinc diethyldithiocarbamate, etc.), guanidines (e.g., diphenylguanidine, di-o-tolylguanidine, etc.), sulfenamides (e.g., benzothiazyl-2-diethylsulfenamide, N-cyclohexyl-2-benzothiazyl sulfenamide, etc.), thiurams (e.g., tetramethylthiurammonosulfide, tetramethylthiuramdisulfide, etc.), xanthogenic acids (e.g., sodium isopropylxanthogenate, zinc isopropylxanthogenate, etc.), aldehyde ammonias (e.g., acetaldehyde ammonia, hexamethylenetetramine, etc.), aldehyde amines (e.g., n-butylaldehyde aniline, butylaldehyde monobutylamine, etc.), and metal oxides (e.g., zinc oxide, etc.). Preferably, thioureas and thiazoles are used.

These crosslinking accelerators may be used alone or in combination of two or more kinds. Preferably, thioureas and thiazoles are used in combination. The combination use of these accelerators can ensure a good foam shape of the obtained EPDM foam.

The mixing ratio of the crosslinking accelerator is in the range of, for example, 0.01 to 20 parts by weight, preferably 0.02 to 10 parts by weight, or more preferably 0.06 to 4 parts by weight, per 100 parts by weight of the ethylene-propylene-diene rubber. Specifically, in the case of using thioureas, the mixing ratio of the thioureas is in the range of, for example, 0.01 to 5 parts by weight, or preferably 0.1 to 1 part by weight, per 100 parts by weight of the ethylene-propylene-diene rubber.

The foaming aids that may be used include, for example, a urea foaming aid, a salicylic acid foaming aid, and a benzoic acid foaming aid. Preferably, the urea foaming aid is used. These foaming aids may be used alone or in combination of two or more kinds.

The mixing ratio of the foaming aid is in the range of, for example, 0.5 to 20 parts by weight, or preferably 1 to 10 parts by weight, per 100 parts by weight of the ethylene-propylene-diene rubber.

According to the present invention, the rubber composition may also properly contain a polymer other than EPDM, a processing aid, a pigment, a flame retardant, a filler, and a softening agent as required.

The polymers other than the ethylene-propylene-diene rubber, which may be used, include, for example, a rubber polymer and a non-rubber polymer. The rubber polymers that may be used include, for example, a rubber copolymer containing a component of a cyclic or non-cyclic polyene having non-conjugated double bonds (e.g., α-olefin-dicyclopentadienes, such as butene-1, ethylidene norbornene, etc.), ethylene-propylene rubber, silicone rubber, fluorine rubber, acrylic rubber, polyurethane rubber, polyamide rubber, natural rubber, polyisobutylene rubber, polyisoprene rubber, chloroprene rubber, butyl rubber, nitrile butyl rubber, styrene-butadiene rubber, styrene-butadiene-styrene rubber, styrene-isoprene-styrene rubber, styrene-ethylene-butadiene rubber, styrene-ethylene-butylene-styrene rubber, styrene-isoprene-propylene-styrene rubber, and chlorosulfonated polyethylene rubber.

The non-rubber polymers that may be used include, for example, polyethylene, polypropylene, acrylic polymer (e.g., alkyl poly(meth)acrylate, etc.), polyvinyl chloride, ethylene-vinyl acetate copolymers, polyvinyl acetate, polyamide, polyester, chlorinated polyethylene, urethane polymers, styrene polymers, silicone polymers, and epoxy resins. Preferably non-rubber polymer, or more preferably polyethylene is used. These polymers other than the ethylene-propylene-diene rubber may be used alone or in combination of two or more kinds.

The mixing ratio of the polymer other than the ethylene-propylene-diene rubber is, for example, 100 parts by weight or less, or preferably 50 parts by weight or less, and usually 1 part by weight or more, per 100 parts by weight of the ethylene-propylene-diene rubber.

The processing aids that may be used include, for example, stearic acid and esters thereof, and zinc oxide. These processing aids may be used alone or in combination of two or more kinds. The mixing ratio of the processing aid is in the range of, for example, 0.1 to 20 parts by weight, or preferably 1 to 10 parts by weight, per 100 parts by weight of the ethylene-propylene-diene rubber.

The pigments that may be used include, for example, carbon black. These pigments may be used alone or in combination of two or more kinds. The mixing ratio of the pigment is in the range of, for example, 1 to 50 parts by weight, or preferably 2 to 30 parts by weight, per 100 parts by weight of the ethylene-propylene-diene rubber.

The flame retardants that may be used include, for example, an inorganic flame retardant, a bromine-based flame retardant, a chlorine-based flame retardant, a phosphorus flame retardant, and an antimony-based flame retardant. Of these, an inorganic flame retardant and a bromine-based flame retardant are preferably used from the viewpoint of metal corrosion. The mixing ratio of the flame retardant is in the range of, for example, 20 to 300 parts by weight, or preferably 50 to 250 parts by weight, per 100 parts by weight of the ethylene-propylene-diene rubber.

The inorganic flame retardants that may be used include, for example, aluminum hydroxide, magnesium hydroxide, a hydrate of magnesium oxide and nickel oxide, and a hydrate of magnesium oxide and zinc oxide.

The bromine-based flame retardants that may be used include, for example, ethylene-bis-tetrabromophthalimide, tetrabromo phthalic anhydride, tetrabromobisphenol A, tetrabromobisphenol S, hexabromobiphenyl ether, decabromodiphenyloxide, octabromodiphenyloxide, tetrabromodiphenyloxide, hexabromocyclododecane, tetrabromocyclooctane, ethylene-bis-pentabromophenyl, 1,2-bis-tetrabromophenylethane, bis(tribromophenoxy)ethane, bis(pentabromophenyl)ethane, tetrabromobenzene, tetrabromodiphenoxybenzene, pentabromobenzene, hexabromobenzene tris(2,3-dibromopropyl-1) isocyanurate, tribromophenol, brominated polystyrene, brominated polyacrylate, brominated bisphenol A type epoxy resin or modified forms thereof, and brominated polyphenylene ether.

The fillers that may be used include, for example, inorganic fillers such as calcium carbonate, magnesium carbonate, calcium hydroxide, magnesium hydroxide, aluminum hydroxide, silicic acid and salts thereof, clay, talc, mica powder, bentonite, silica, alumina, aluminum silicate, acetylene black, and aluminum powder; organic fillers such as cork; and other known fillers. These fillers may be used alone or in combination of two or more kinds. The mixing ratio of the filler is in the range of, for example, 10 to 300 parts by weight, preferably 50 to 200 parts by weight, or more preferably 100 to 200 parts by weight, per 100 parts by weight of the ethylene-propylene-diene rubber.

The softening agents that may be used include, for example, petroleum oils (e.g., paraffin-based process oil (paraffin oil, etc.), naphthene-based process oil, drying oils or animal and vegetable oils (e.g., linseed oil, etc.), aromatic process oil, etc.), asphalts, low molecular weight polymers, organic acid esters (e.g., phthalic ester (e.g., di-2-ethylhexyl phthalate (DOP), dibutyl phthalate (DBP)), phosphate, higher fatty acid ester, alkyl sulfonate ester, etc.), and thickeners. Preferably petroleum oils, or more preferably paraffin-based process oil is used. These softening agents may be used alone or in combination of two or more kinds. The mixing ratio of the softening agent is in the range of, for example, 10 to 60 parts by weight, or preferably 20 to 50 parts by weight, per 100 parts by weight of the ethylene-propylene-diene rubber.

Further, depending on the purpose and application, the rubber composition can properly contain known additives such as a plasticizer, , an antioxidant, an oxidation inhibitor, a coloring agent, and a mildewproofing agent, within the range of not affecting the excellent effect of the EPDM foam to be obtained.

The rubber composition is prepared in the form of kneaded mixture by properly mixing each above-mentioned component and kneading the mixture using a kneader, a mixer, or a mixing roll. During the kneading, the mixture may also be properly heated. Alternatively, kneading can be performed by first kneading components other than additive components to be added in small amounts, such as a crosslinking agent, a foaming agent, a crosslinking aid, and a foaming aid, and then adding the additive components to the kneaded mixture.

Then, the rubber composition thus prepared is foamed, so that an EPDM foam can be obtained. The method for foaming a rubber composition is not particularly limited and a known method is used. For example, the kneaded mixture can be formed into the form of a sheet using a calender, an extruder, or the like, and then be foamed. Alternatively, the kneaded mixture can be formed into a complex shape such as an uneven shape, by injection molding, press forming, or other forming method, and then be foamed.

The heating temperature for foaming is properly selected, for example, depending on the crosslinking starting temperature of the crosslinking agent to be mixed, or the foaming temperature of the foaming agent to be mixed. For example, the heating temperature is 450°C or less, preferably 100 to 350°C, or more preferably 120 to 250°C.

This foaming causes the kneaded mixture to be crosslinked while foaming, so that an EPDM foam is formed. The EPDM foam thus obtained has a thickness in the range of, for example, 0.1 to 50 mm, or preferably 1 to 45 mm.

The EPDM foam thus obtained has a density in the range of, for example, 0.30 g/cm³ or less, preferably 0.15 g/cm³ or less, more preferably 0.10 g/cm³ or less, or even more preferably 0.06 g/cm³ or less (and usually 0.04 g/cm³ or more). When the density of the EPDM foam exceeds 0.30 g/cm³, the foam may have inferior flexibility, so that the foam cannot follow uneven sealing surface, resulting in deterioration of sealing performance. Further, when the density thereof is less than 0.04 g/cm³, the strength of the foam may deteriorate. Therefore, within the above range of the density, the EPDM foam can ensure water stopping performance.

Cells in the EPDM foam thus obtained may have a closed-cell structure, or a semi-closed and semi-open cell structure (percentage of closed cells in excess of 0% and less than 100%, or preferably 10 to 98%). Preferably, the EPDM foam has a closed-cell structure in order to ensure high sealing performance.

The EPDM foam has an average cell diameter of, for example, 300 to 1200 µm, or preferably 300 to 1000 µm. When the average cell diameter thereof exceeds 1200 µm, the sealing performance may deteriorate. Therefore, within the above range of the average cell diameter, the EPDM foam can ensure water stopping performance.

A foaming ratio (density ratio before and after foaming) of the EPDM foam thus obtained is, for example, 4 times or more, or preferably 10 times or more, and usually 30 times or less. Less than 4 times of the foaming ratio may deteriorate the flexibility of the EPDM foam, so that the EPDM foam cannot follow uneven sealing surface, resulting in deterioration of sealing performance. Further, when the foaming ratio exceeds 30 times, the strength of the EPDM foam may deteriorate. Therefore, within the above range of the foaming ratio, the EPDM foam can ensure water stopping performance.

A 50% compressive load value (according to JIS K 6767) of the EPDM foam is in the range of, for example, 2.00 to 8.00 N/cm², or preferably 3.00 to 7.00 N/cm². The compressive load exceeding 8.00 N/cm² may harden the foam and impair flexibility of the foam, so that the EPDM foam cannot follow uneven sealing surface, resulting in deterioration of sealing performance. Further, the compressive load less than 2.00 N/cm² may excessively soften the foam, resulting in deterioration of sealing performance. Therefore, within the above range of the compressive load, the EPDM foam can ensure water stopping performance.

The EPDM foam of the present invention is characterized in having water stopping performance lasting for 1 hour or more, or preferably for 24 hours or more according to the following 50% waterstop test. The EPDM foam having water stopping performance lasting for 1 hour or more can be suitably used as a sealing material.
50% waterstop test: An EPDM foam sample is prepared by punching in a U-shape of 10 mm in thickness, 10 mm in width, 148 mm in height, and 54 mm in distance between its both distal ends. The prepared sample is compressed in a thickness direction at a compressibility of 50%, water is poured into the U shape portion up to 100 mm high, and the period of time is measured until water leaks.

The EPDM foam of the present invention is characterized in that metal corrosion is not observed according to the following metal corrosion test. When the test results show no metal corrosion, the EPDM foam can be used even in applications where the EPDM foam is in contact with metal such as electronic equipment and home appliances over a long period of time without causing metal corrosion.
Metal corrosion test: After 0.5 g of the EPDM foam is put into a 100-mL sealed bottle, a polished and washed silver (in plate form) is affixed to the inside of a lid of the scaled bottle. This bottle is placed in an 85°C thermostat oven for 7 days, and the presence or absence of silver corrosion is then examined.

Since the EPDM foam of the present invention has high water stopping performance according to the above-mentioned waterstop test, it has the same level of sealing performance as the case of crosslinking the EPDM foam with conventional sulfur. Further, since the EPDM foam does not have metal corrosiveness, the EPDM foam can be used even in applications where the EPDM foam is in contact with metals such as electronic equipment and home appliances over a long period of time without causing metal corrosion.

Hence, the EPDM foam of the present invention can be suitably used as sealing members for industrial products that need sealing including, for example, automobiles, electric and electronic products, and housing products, to seal up spaces between metal members or parts of those products, the sealing members including, for example, exterior sealing material of automobiles, sealing material of electric and electronic products, and sealing material of housings, in the form of dust-proof material, heat insulating material, noise insulation material, vibration-proof material, cushioning material, filling material, and water shutoff material, for the purposes of dust proof, heat insulation, noise reduction, damping, shock-absorbing, and water tight and air tight.

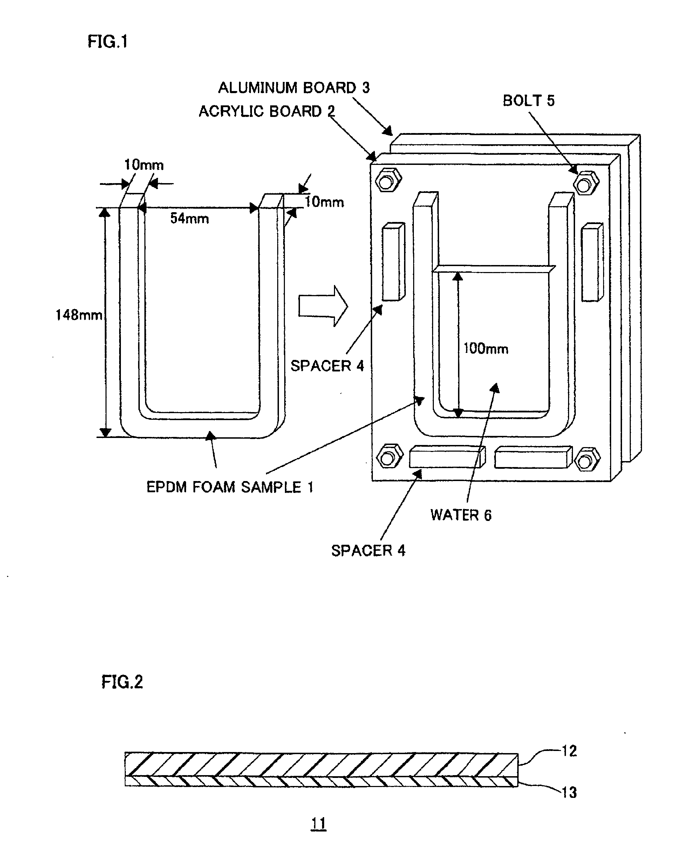

FIG. 2 is a schematic sectional view showing an embodiment of an adhesive sealing material according to the present invention.

The present invention further contains an adhesive sealing material having the above-mentioned EPDM foam.

In FIG. 2, the adhesive sealing material 11 has a foamed layer 12 (after foaming) and an adhesive layer 13 provided on a surface of the foamed layer 12.

The foamed layer 12 is made of the above-mentioned EPDM foam and has a thickness of, for example, 0.1 to 50 mm, or preferably 1 to 45 mm.

The adhesive layer 13 is formed from, for example, a known pressure-sensitive adhesive.

The pressure-sensitive adhesives that may be used include, for example, an acrylic pressure-sensitive adhesive, a rubber pressure-sensitive adhesive, a silicone pressure-sensitive adhesive, a polyester pressure-sensitive adhesive, a urethane pressure-sensitive adhesive, a polyamide pressure-sensitive adhesive, an epoxy pressure-sensitive adhesive, a vinyl alkyl ether pressure-sensitive adhesive, and a fluorine pressure-sensitive adhesive. In addition, a hot melt type pressure-sensitive adhesive may also be used as the pressure-sensitive adhesive.

These pressure-sensitive adhesives can be used alone or in combination of two or more kinds.

Preferably, an acrylic pressure-sensitive adhesive and a rubber pressure-sensitive adhesive are used as the pressure-sensitive adhesive.

The acrylic pressure-sensitive adhesive is, for example, a pressure-sensitive adhesive including alkyl (meth)acrylate as a main component, and can be obtained by a known method.

The rubber pressure-sensitive adhesive can be obtained from, for example, natural rubber and/or synthetic rubber, particularly, rubbers such as polyisobutylene rubber, polyisoprene rubber, chloroprene rubber, butyl rubber, and nitrile butyl rubber by a known method.

The pressure-sensitive adhesive form is not particularly limited, and various forms such as emulsion pressure-sensitive adhesive, solvent pressure-sensitive adhesive, oligomer pressure-sensitive adhesive, and solid pressure-sensitive adhesive can be adopted.

The adhesive layer 13 has a thickness of, for example, 10 to 10000 µm, or preferably 50 to 5000 µm.

The method for forming the adhesive sealing material 11 is not particularly limited and a known method can be adopted. Specifically, for example, an EPDM foam is first produced by the above-mentioned method to obtain a foamed layer 12. Subsequently, an adhesive layer 13 is laminated on a surface of the foamed layer 12 by a known method. Thus, the adhesive sealing material 11 can be formed.

Since the foamed layer 12 is made of the above-mentioned EPDM foam, the adhesive sealing material 11 is excellent in sealing performance and metal corrosion resistance. Further, since the adhesive sealing material 11 has the adhesive layer 13, the foamed layer 12 can be adhesively (pressure-adhesively) bonded to any place. As a result of this, according to such adhesive sealing material 11, the foamed layer 12 made of the above-mentioned EPDM foam can effectively seal a gap in any member without causing metal corrosion.

In the above-mentioned description, the adhesive layer 13 is formed in the form of a base-less adhesive tape or sheet only made of pressure-sensitive adhesive. The adhesive layer 13 can, however, be formed in the form of, for example, an adhesive tape or sheet with a base material, though not shown.

In such case, the adhesive layer 13 is formed in the form of a laminated adhesive tape or sheet in which a pressure-sensitive adhesive is provided on at least one surface of the base material, which is not shown, or preferably on both surfaces of the base material (pressure sensitive adhesive-base material-pressure sensitive adhesive).

The base material (not shown) is not particularly limited and examples thereof include, for example, plastic base materials such as a plastic film and a sheet; paper base materials such as paper; fiber base materials such as woven cloth, nonwoven cloth, and net; metal base materials such as a metal foil and a metal plate; rubber base materials such as a rubber sheet; foamable base materials such as a foaming sheet; and further, laminated bodies thereof.

The method for forming the adhesive layer 13 in the form of an adhesive tape or sheet with a base material is not particularly limited, and a known method may be adopted.

In the above-mentioned description, the adhesive layer 13 is provided only on a surface of the foamed layer 12. However, the adhesive layer 13 can also be provided on both surfaces (front surface and back surface) of the foamed layer 12, though not shown.

Such adhesive sealing material 11 has the adhesive layer 13 provided on both surfaces of the foamed layer 12, so that these two adhesive layers 13 allow the adhesive sealing material 11 (foamed layer 12) to be fixed to a gap in a member, thereby achieving more reliable sealing of the gap.

### EXAMPLES

While in the following, the present invention is described in further detail with reference to Examples and Comparative Examples, the present invention is not limited to any of them by no means.

### 1) Preparation of Examples and Comparative Examples

In the blending formulation shown in TABLE 1, first, an ethylene-propylene-diene rubber, a processing aid, a pigment, a flame retardant, a filler, a softening agent, and an N,N'-dibutyl thiourea were blended. The blended mixture was kneaded with a 3 L pressurizing kneader to prepare a primary kneaded mixture.

A crosslinking agent, a crosslinking accelerator (except an N,N'-dibutyl thiourea), a foaming agent, and a foaming aid were blended separately. The blended mixture was then blended with the primary kneaded mixture, and the resulting mixture was kneaded with a 25.4-cm (10-inch) mixing roll to prepare a secondary kneaded mixture (rubber composition).

Thereafter, the rubber composition was extruded into a sheet-like shape having a thickness of about 10 mm using a single-screw extruder (45mmϕ). The resulting sheet was then cut into a piece having a width of 100 mm and a length of 100 mm to produce a cut sheet.

The cut sheet was then preheated in a hot air circulation type oven at 100°C for 15 minutes. Thereafter, the sheet was heated up to 160°C for 15 minutes, and then kept heated at 160°C for 15 minutes to foam the sheet, so that an EPDM foam was obtained.

### 2) Evaluation

The following data on the obtained EPDM foam were evaluated. These evaluations were carried out for all Examples and Comparative Examples. The results are shown in TABLE 1.

### (50% Compressive Load Value)

Skin layers on the upper and lower sides of the EPDM foam were removed to produce a 10-mm-thick test piece. Thereafter, the test piece was compressed at a compression rate of 10 mm/min. using a compression testing machine according to the compressive load test of JIS K 6767. At 10 seconds after the compression, the compressive load was read to obtain a compressive load value.

### (Density)

Skin layers on the upper and lower sides of the EPDM foam were removed to produce a 10-mm-thick test piece. Thereafter, the weight of the test piece was measured to determine the weight per unit volume of the piece by calculation.

### (Foaming Ratio)

The foaming ratio was measured from the ratio (density of the rubber composition before foaming/density of the foam after foaming) of the density before and after foaming.

### (Average Cell Diameter)

An enlarged image of a cell portion of the foam was captured with a digital microscope ("VH-8000" manufactured by Keyence Corporation), and image analysis was performed by using an image analysis software ("Win ROOF" manufactured by Mitani Corporation), thereby determining the average cell diameter.

### (50% Waterstop Test)

An outline of a 50% waterstop test is shown in FIG. 1. An EPDM foam sample 1 was prepared by punching in a U-shape of 10 mm in thickness, 10 mm in width, 148 mm in height, and 54 mm in distance between its both distal ends. The prepared sample 1 was fastened to an acrylic board 2 and an aluminum board 3 through spacers 4 using bolts 5. The sample 1 was compressed in a thickness direction at a compressibility of 50%, water 6 was poured into the U shape portion up to 100 mm high, and the period of time was measured until water leaked. The case where water leaked within 1 hour was evaluated as "L (leaked)", the case where water did not leak within 1 hour was evaluated as "N/L 1 (not leaked within 1 hour)", and particularly, the case where water leakage was not observed for 24 hours was evaluated as "N/L 24 (not leaked for 24 hours)".

### (Metal Corrosion Test)

After 0.5 g of the EPDM foam was put into a 100-mL sealed bottle, a polished and washed silver (in plate form) was affixed to the inside of a lid of the sealed bottle. This bottle was placed in an 85°C thermostat oven for 7 days, and the presence or absence of silver corrosion (discoloration) was then examined. The case where corrosion (discoloration) was not observed was evaluated as "A (absent)," and the case where corrosion was observed was evaluated as "P (present)".

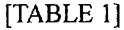

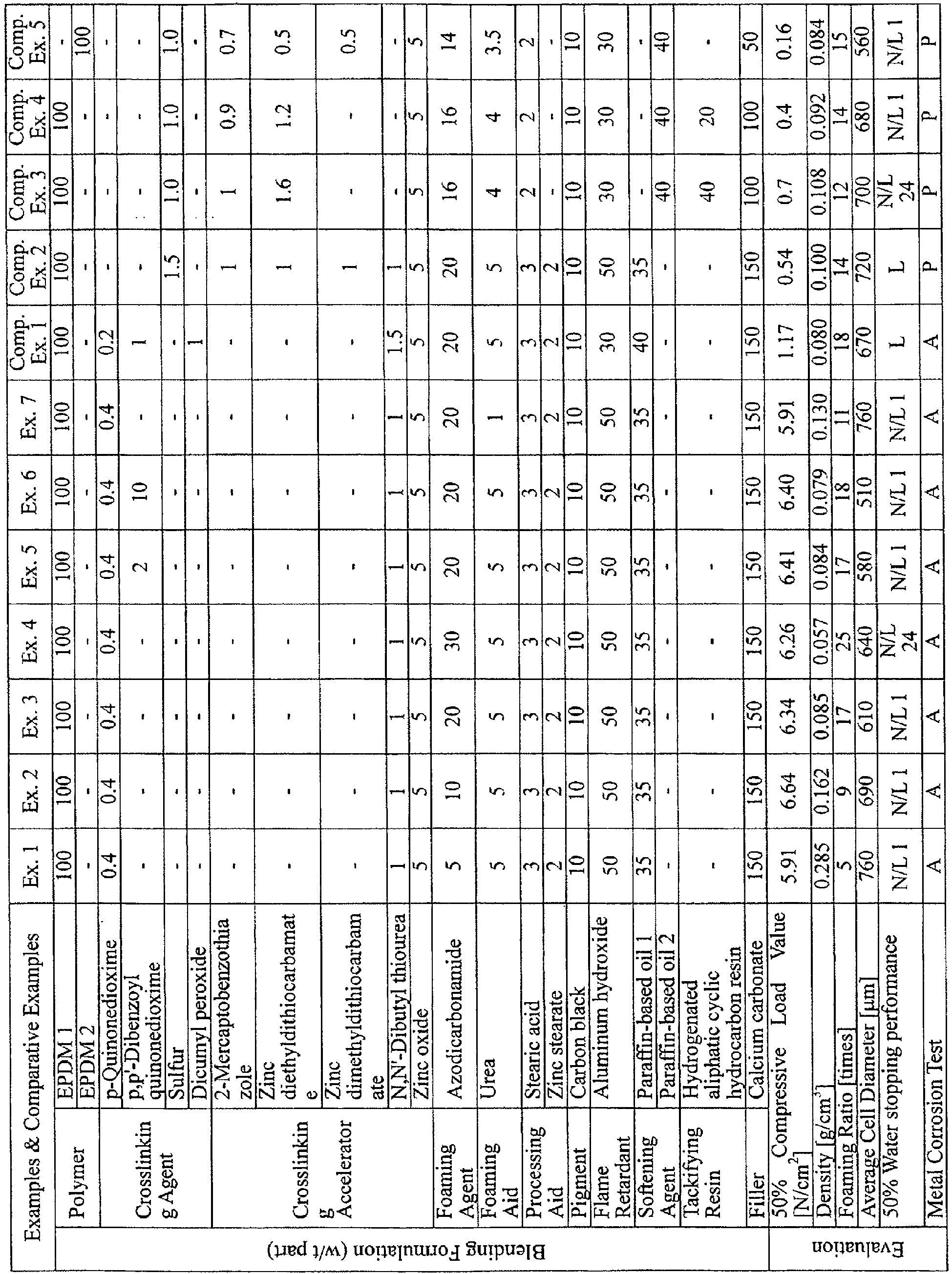

The details in TABLE 1 are given below.
EPDM1: "EPTALLOY PX-047" available from Mitsui Chemicals, Inc., diene content: 4.5% by weight (5-ethylidene-2-norbornene), ethylene content: 50% by weight, Mooney viscosity (ML₁₊₄ 100°C) 40
• EPDM2: "EPT4021 available from Mitsui Chemicals, Inc., diene content: 8.0% by weight (5-ethylidene-2-norbornene), ethylene content: 51% by weight, Mooney viscosity (ML₁₊₄ 100°C) 24
p-Quinonedioxime: "VULNOC GM" available from Ouchi Shinko Chemical Industrial Co., Ltd.
p,p'-Dibenzoyl quinonedioxime: "VULNOC DGM" available from Ouchi Shinko Chemical Industrial Co., Ltd.
Sulfur: "ALPHAGRAN S-50EN" available from Touchi Co., Ltd.
Dicumyl peroxide: "PERCUMYL D-40MB (K) "available from Nippon Oil and Fats Co., Ltd., 40% by weight of dicumyl peroxide
2-Mercaptobenzothiazole: "NOCCELER M" available from Ouchi Shinko Chemical Industrial Co., Ltd.
Zinc diethyldithiocarbamate: "NOCCELER EZ" available from Ouchi Shinko Chemical Industrial Co., Ltd.
• Zinc dimethyldithiocarbamate: "NOCCELER PZ" available from Ouchi Shinko Chemical Industrial Co., Ltd.
N,N'-Dibutyl thiourea: "NOCCELER BUR" available from Ouchi Shinko Chemical Industrial Co., Ltd.
Zinc oxide: "Zinc Oxide Type 2" available from Mitsui Mining and Smelting Co., Ltd.
Azodicarbonamide: "VINYFOR AC#LQ" available from Eiwa Chemical Ind.
Urea: "CELLPASTE-K5" available from Eiwa Chemical Ind.
Stearic acid: "Stearic acid powder Sakura" available from NOF Corporation
Zinc stearate: "SZ-P" available from Sakai Chemical Industry Co., Ltd.
Carbon black: "CB #50" available from Asahi Carbon
• Aluminum hydroxide: "HIGILITE H32" available from Showa Denko K.K.
Paraffin-based oil 1: "PW-380" available from Idemitsu Kosan Co., Ltd.
Paraffin-based oil 2: "PW-90" available from Idemitsu Kosan Co., Ltd.
Tackifying resin: "ARKON P-100" available from Arakawa Chemical Industries, Ltd., hydrogenated aliphatic cyclic hydrocarbon resin
Filler: "N-calcium carbonate heavy" available from Maruo Calcium Co., Ltd.

## Claims

1. An EPDM foam comprising an ethylene-propylene-diene rubber, the EPDM foam containing sulfur or a sulfur compound in an amount of less than 1000ppm,
wherein the EPDM foam has water stopping performance lasting for 1 hour or more according to the 50% waterstop test and metal corrosion is not observed according to the metal corrosion test.

2. The EPDM foam according to claim 1, having water stopping performance lasting or 24 hours or more according to the 50% waterstop test.

3. The EPDM foam according to claim 1, having a density of 0.30 g/cm³ or less.

4. The EPDM foam according to claim 1, having a closed cell structure.

5. The EPDM foam according to claim 1, obtained by foaming a rubber composition comprising an ethylene-propylene-diene rubber, a quinoid crosslinking agent, and a foaming agent.

6. The EPDM foam according to claim 5, wherein the quinoid crosslinking agent comprises p-quinonedioxime.

7. The EPDM foam according to claim 5, wherein p-quinonedioxime is contained in an amount of 0.01 to 20 parts by weight per 100 parts by weight of the ethylene-propylene-diene rubber.

8. An adhesive sealing material comprising: a foamed layer made of an EPDM foam in which a sulfur or sulfurcompound is contained in an amount of less than 1000 ppm and which comprises an ethylene-propylene-diene rubber; and an adhesive layer provided on a surface of the foamed layer,
wherein the EPDM foam has water stopping performance lasting for 1 hour or more according to the 50% waterstop test and metal corrosion is not observed according to the metal corrosion test.

## Patentansprüche

1. EPDM-Schaum, der einen Ethylen-Propylen-dien-Gummi enthält, wobei der EPDM-Schaum Schwefel oder eine Schwefelverbindung in einer Menge von weniger als 1000 ppm enthält,
wobei der EPDM-Schaum eine Wasserstoppleistung aufweist, die gemäß dem 50 %-Wasserstopp-Test 1 Stunde oder länger anhält, und Metallkorrosion gemäß dem Metallkorrosionstest nicht beobachtet wird.

2. EPDM-Schaum gemäß Anspruch 1, der eine Wasserstoppleistung hat, die 24 Stunden oder länger gemäß dem 50 %-Wasserstopp-Test anhält.

3. EPDM-Schaum gemäß Anspruch 1, der eine Dichte von 0,30 g/cm³ oder weniger aufweist.

4. EPDM-Schaum gemäß Anspruch 1, der eine geschlossene Zellstruktur aufweist.

5. EPDM-Schaum gemäß Anspruch 1, der durch Schäumen einer Gummiverbindung erhalten wird, die einen Ethylen-Propylen-dien-Gummi, ein Chinoid-Vemetzungsmittel und ein Schäummittel enthält.

6. EPDM-Schaum gemäß Anspruch 5, bei der das Chinoid-Vemetzungsmittel p-Chinondioxim enthält.

7. EPDM-Schaum gemäß Anspruch 5, bei dem das p-Chinondioxim in einer Menge von 0,01 bis 20 Gewichtsanteilen pro 100 Gewichtsanteile an Ethylen-Propylen-dien-Gummi enthalten ist.

8. Haftendes Dichtmaterial, enthaltend: eine geschäumte Schicht, die aus einem EPDM-Schaum hergestellt ist, in dem Schwefel oder eine Schwefelverbindung in einer Menge von weniger als 1000 ppm enthalten ist und der einen Ethylen-Propylen-dien-Gummi; und eine auf einer Oberfläche der geschäumten Schicht vorgesehene Haftschicht aufweist,
wobei der EPDM-Schaum eine Wasserstopp-Leistung aufweist, die gemäß dem 50 %-Wasserstopp-Test 1 Stunde oder länger anhält, und Metallkorrosion gemäß dem Metallkorrosionstest nicht beobachtet wird.

## Revendications

1. Mousse EPDM comprenant un caoutchouc éthylène-propylène-diène, la mousse EPDM contenant du soufre ou un composé soufré en une quantité inférieure à 1000 ppm,
où la mousse EPDM a des caractéristiques d'étanchéité à l'eau durant 1 heure ou plus selon le test d'arrêt de l'eau à 50% et l'on n'observe pas de corrosion métallique selon le test de corrosion des métaux.

2. Mousse EPDM selon la revendication 1, ayant des caractéristiques d'étanchéité à l'eau durant 24 heures ou plus selon le test d'arrêt de l'eau à 50%.

3. Mousse EPDM selon la revendication 1, ayant une masse spécifique de 0,30 g/cm³ ou moins.

4. Mousse EPDM selon la revendication 1, ayant une structure à cellules fermées.

5. Mousse EPDM selon la revendication 1, obtenue par moussage d'une composition de caoutchouc comprenant un caoutchouc éthylène-propylène-diène, un agent de réticulation quinoïde et un agent moussant.

6. Mousse EPDM selon la revendication 5, où l'agent de réticulation quinoïde comprend le p-quinonedioxime.

7. Mousse EPDM selon la revendication 5, où le p-quinone-dioxime est présent en une quantité allant de 0,01 à 20 parties en poids par 100 parties en poids du caoutchouc éthylène-propylène-diène.

8. Matériau adhésif de scellement comprenant : une couche de mousse constituée d'une mousse EPDM, dans laquelle le soufre ou un composé soufré est présent en une quantité inférieure à 1000 ppm et qui comprend un caoutchouc éthylène-propylène-diène, et une couche adhésive disposée sur une face de la couche de mousse,
où la mousse EPDM a des caractéristiques d'étanchéité à l'eau durant 1 heure ou plus selon le test d'arrêt de l'eau à 50% et on n'observe pas de corrosion métallique selon le test de corrosion des métaux.
